# EUROPÄISCHE PATENTSCHRIFT

(11) **EP 1 367 473 B1**
(45) Veröffentlichungstag und Bekanntmachung des Hinweises auf die Patenterteilung: **22.12.2004**
(21) Anmeldenummer: 03008624.3
(22) Anmeldetag: 15.04.2003
(51) Int. Cl.: G05D 23/13, F01P 7/16

(54) **Thermostatventil**
Thermostatic valve
Soupape thermostatique

(30) Priorität: 31.05.2002 DE 10224092
(43) Veröffentlichungstag der Anmeldung: 03.12.2003
(73) Patentinhaber: Bayerische Motoren Werke Aktiengesellschaft, 80809 München (DE)
(72) Erfinder: Kovacic, Marko, 8573 Ismaning (DE); Heismann, Robert, 81541 München (DE)

(56) Entgegenhaltungen:
- GB-A- 1 014 235
- US-A- 5 727 729

## Beschreibung

Die vorliegende Erfindung betrifft ein Thermostatventil gemäß dem Oberbegriff des Patentanspruches 1.

Ein derartiges Thermostatventil ist in der DE 38 23 771 A1 beschrieben. Dieses Thermostatventil weist ein Gehäuse mit einem vom Motor kommenden Zuströmanschluss auf, einem zum Motor führenden Abströmanschluss für "Kurzschlussbetrieb" und einen zum Kühler führenden Abströmanschluss für Kühlbetrieb. Im Thermostatventilgehäuse ist ein Thermostateinsatz angeordnet, der ein "Dehnstoffelement" in Form einer Wachspatrone aufweist. Die Wachspatrone ist entgegen der Kraft einer Feder, die an einem Flansch abgestützt ist, verschiebbar. Der Flansch ist mittels zweier diametral gegenüberliegender Haltearme an einem ringförmigen Tragelement fixiert. Am Dehnstoffelement sind zwei Ventilkörper befestigt. Im Betrieb wird da die Wachspatrone mit Kühlmittel umspült. In Abhängigkeit von der Temperatur des Kühlmittels dehnt sich die Wachspatrone aus, was zum Öffnen bzw. Schließen der Ventile führt. Thermostatventile ähnlicher Art werden in US 5 727 729 und GB 1 014 235 A beschriehen.

Die Ventilkörper können auch als Haupt- und Kurzschlussteller bezeichnet werden. Im Thermostatgehäuse werden der vom Kühler kommende abgekühlte Kühlmittelstrom, der vom Motor kommende heiße Kühlmittelstrom und der von der Heizung, d.h. vom Heizungswärmetauscher kommende Kühlmittelstrom gemischt. Die sich einstellende Kühlmittelmischtemperatur steuert über die Wachspatrone den Hub des Haupt- und Kurzschlusstellers.

Beim Heizungsbetrieb wird dem Kühlkreislauf Wärme entzogen. Das von der Heizung kommende Kühlmittel kann dabei sehr stark abgekühlt sein. Bei aus anmelderintemem Stand der Technik bekannten Thermostatventilen wird die Wachspatrone von dem von der Heizung kommenden "abgekühlten" Kühlmittelstrom direkt angeströmt. Wegen der direkten Anströmung der Wachspatrone ergibt sich keine optimale Mischung des heißen, vom Motor kommenden Kühlmittels und des kälteren von der Heizung kommenden Kühlmittels. Die Temperatur an der Wachspatrone kann somit niedriger sein als die Kühlmitteltemperatur, die sich bei optimaler Mischung der Kühlmittelströme einstellen würde, was sich ungünstig auf das Regelverhalten des Thermostatventils auswirkt.

Aufgabe der Erfindung ist es, das eingangs beschriebene Thermostatventil in kostengünstiger Weise kostengünstig zu modifizieren, so dass sich ein gutes Misch- bzw. Regelverhalten ergibt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Thermostatventil mit einem im Thermostatgehäuse angeordneten Thermostateinsatz, der ein patronenartiges Dehnstoffelement aufweist, das entgegen der Kraft einer an einem Flansch abgestützten Feder verschiebbar ist. Der Flansch ist mittels Haltearmen gehalten.

Das Grundprinzip der Erfindung besteht nun darin, zumindest einen der Haltearme hinsichtlich seiner Form und Größe so zu gestalten, dass er als Strömungsleitelement bzw. als "Abschirmelement" fungiert. Durch geeignete Dimensionierung des Haltearmes kann ein direktes Anströmen des Dehnstoffelements mit abgekühltem Kühlmittel verhindert werden, wodurch sich das Regelverhalten des Thermostatventils deutlich verbessert.

Ferner kann dadurch eine bessere Mischung der mit unterschiedlichen Temperaturen in das Thermostatgehäuse eintretenden Kühlmittelströme erreicht werden, was das Regelverhalten des Thermostatventiles weiter verbessert.

Nach einer Weiterbildung der Erfindung ist der Haltearm so angeordnet, dass er als "Prallblech" fungiert, auf das der aus einem Zuströmanschluss eintretende Kühlmittelstrom auftrifft und am Halteelement seitlich entlang strömt. Vorzugsweise hat der Haltearm die Form eines Kreiszylindersegments.

Um ein direktes Anströmen der Wachspatrone zu verhindern, hat der Haltearm eine gewisse "Mindestbreite". Vorzugsweise überdeckt der Haltearm in Umfangsrichtung der Wachspatrone mindestens einen Winkelbereich, welcher in Bezug auf die Umfangsrichtung der Wachspatrone der "Breite" des Zuströmanschlusses entspricht.

Eine sehr gute Abschirmung des Dehnstoffelements wird erreicht, wenn das Halteelement einen Winkelbereich von 30 bis 90° überdeckt.

Im folgenden wird die Erfindung anhand eines Ausführungsbeispiels im Zusammenhang mit der Zeichnung näher erläutert. Es zeigen:
- Figur 1: einen Querschnitt, aus dem der grundsätzliche Aufbau eines Thermostatventils gemäß der Erfindung ersichtlich ist;
- Figur 2: einen Querschnitt durch ein herkömmliches Thermostatventil;
- Figur 3: einen Querschnitt durch ein gemäß der Erfindung modifiziertes Thermostatventil.

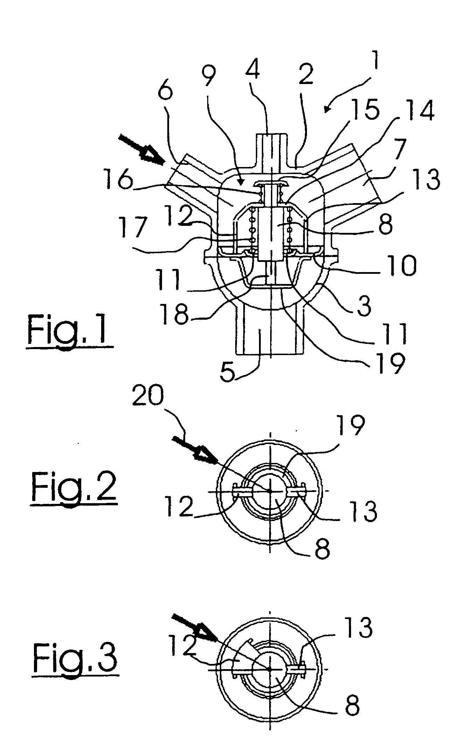

Figur 1 zeigt ein Thermostatventil 1 mit einem Gehäuse, das ein oberes Gehäuseteil 2 und ein unteres Gehäuseteil 3 aufweist. Das Thermostatventil 1 weist einen vom Motor kommenden Zulaufanschluss 4 (Kurzschluß), einen vom Kühler kommenden Zulaufanschluss 5, einen von der Heizung kommenden Zulaufanschluss 6 und einen zum Motor führenden Abströmanschluss 7 auf. Die Zulaufanschlüsse 4, 5 sind axial bezüglich eines durch eine Wachspatrone gebildeten Dehnstoffelementes 8 angeordnet. Der Zulaufanschluss 6 und der Abströmanschluss 7 hingegen sind schräg zu der Längsachse der Wachspatrone 8 angeordnet.

Die Wachspatrone 8 ist Bestandteil eines im Thermostatventil angeordneten Thermostateinsatzes 9.

Der Thermostateinsatz 9 weist ferner ein ringförmiges Tragelement 10 auf. Das Tragelement 10 bildet einen "Ventilsitz", der mit einem Hauptteller 11 zusammenwirkt. Der Hauptteller 11 ist fest mit dem Gehäuse der Wachspatrone 8 verbunden.

Vom Tragelement 10 stehen senkrecht ein erster und ein zweiter Haltearm 12, 13 ab, welche einen ringförmigen Flansch 14 halten. Die Wachspatrone 8 durchsetzt den ringförmigen Flansch 14 und weist an ihrem oberen Ende einen Kurzschlussteller 15 auf. Der Kurzschlussteller 15 ist axial verschieblich am oberen Ende der Wachspatrone 8 angeordnet. Zwischen dem ringförmigen Flansch 14 und dem Kurzschlussteller 15 ist eine Feder 16 angeordnet, welche den Kurzschlussteller 15 gegen einen Endanschlag (nicht dargestellt) der Wachspatrone 8 vorspannt.

Ferner ist zwischen dem Hauptteller 11 und dem ringförmigen Flansch 14 eine Feder 17 angeordnet. Die Feder 17 stützt sich also an dem ringförmigen Flansch 14 ab und drückt den mit dem Dehnstoffelement 8 fest verbundenen Hauptteller 11 gegen das ringförmige Tragelement 10. In der hier gezeigten Grundstellung liegt der Hauptteller 11 am Tragelement 10 an und verschließt den Durchgang von der oberen Gehäusehälfte 2 zur unteren Gehäusehälfte 3.

Aus dem Gehäuse der Wachspatrone 8 steht ein "Dehnstift" 18 heraus. Der Dehnstift 18 wird bei einer Erwärmung der Wachspatrone 8 weiter aus dem Gehäuse der Wachspatrone 8 herausgedrückt und zwar gegen einen Abstützbügel 19, welcher ebenfalls fest mit dem Tragelement 10 verbunden ist. Bei einer Erwärmung der Wachspatrone 8 verschiebt sich somit der obere Teil der Wachspatrone 8 zusammen mit dem Hauptteller 11 entgegen der Kraft der Feder 17 nach oben. Bei hinreichender Erwärmung dehnt sich die Wachspatrone so weit aus, dass der Kurzschlussteller 15 die Strömungsverbindung zwischen dem Zuströmkanal 4 und dem Abströmkanal 7 verschließt, d.h., der Kurzschluss wird unterbrochen. Bei weiterer Erwärmung dehnt sich die Wachspatrone so weit aus, dass der Hauptteller 11 vom Tragelement 10 abhebt, wodurch eine Strömungsverbindung zwischen der oberen Gehäusehälfte 2 und der unteren Gehäusehälfte 3 hergestellt wird. D.h. bei starker Erwärmung der Wachspatrone 8 mischen sich die warmen bzw. heißen Kühlmittelströme aus den Zuströmanschlüssen 4 und 6 mit dem abgekühlten Kühlmittelstrom aus dem Zuströmanschluss 5. Über den Abströmanschluss 7 strömt also Kühlmittel mit einer relativ geringen Mischtemperatur ab.

Bei herkömmlichen Thermostatventilen haben die beiden Haltearme 12, 13, an denen der ringförmige Flansch 14 befestigt ist, lediglich eine Haltefunktion. Sie weisen daher eine relativ geringe Breite auf.

Figur 2 zeigt ein solches herkömmliches Thermostatventil in einem Schnitt durch die Teilungsebene der beiden Gehäusehälften 2 und 3. Die beiden Haltearme 12 und 13 sind als relativ schmale Haltebleche ausgeführt. Der Zuströmanschluss 6, der hier nur schematisch durch einen Pfeil 20 dargestellt ist, ist schräg bezüglich der durch die beiden Haltelemente 12, 13 gebildeten Ebene angeordnet. Von der Heizung kommendes abgekühltes Kühlmittel, das über den Zuströmanschluss 6 zuströmt, strömt somit unmittelbar auf die Wachspatrone 8 zu. Es besteht somit die Gefahr, dass sich an der Wachspatrone 8 eine relativ geringe Temperatur einstellt, die geringer ist als die Temperatur, die sich bei optimaler Mischung des von der Heizung kommenden abgekühlten Kühlmittelstroms und des heißen vom Motor kommenden Kühlmittelstroms einstellen würde. Dies ist unerwünscht.

Figur 3 zeigt einen Querschnitt durch ein Thermostatventil, das gemäß der Erfindung verbessert ist. Dort ist der Haltearm 12 als kreissegmentförmiges Blech ausgeführt. Der Haltearm 12 bzw. das Blech erstreckt sich dort über einen wesentlichen größeren Winkelbereich, der mindestens der azimutalen Breite des Zuströmanschlusses 6 entspricht. Ein über den Zuströmanschluss 6 zuströmender Kühlmittelstrom "prallt" also auf den Haltearm 12 bzw. auf das Blech und strömt seitlich daran entlang ab. Dadurch wird die Wachspatrone 8 wesentlich besser von abgekühlten über den Zuströmanschluß 6 in das Gehäuse eintretenden Kühlmittelstroms abgeschirmt. Eine Gefahr einer "Unterkühlung" der Wachspatrone 8 wird somit ausgeschlossen.

## Patentansprüche

1. Thermostatventil (1) mit
einem Gehäuse (2, 3), das Zuströmanschlüsse (4, 4-6) und mindestens einen Abströmanschluss (7) zur Verbindung mit einem Kühlkreislauf eines Kraftfahrzeuges aufweist,
einem im Gehäuse (2, 3) angeordneten Thermostateinsatz (9), der ein patronenartiges Dehnstoffelement (8) aufweist, das entgegen der Kraft einer an einem Flansch (14) abgestützten Feder (17) verschiebbar ist, wobei der Flansch (14) mittels Haltearmen (12, 13) gehalten ist, **dadurch gekennzeichnet, dass** einer der Haltearme (12, 13) unmittelbar im Bereich zwischen einem der Zuströmanschlüsse (6) und dem Dehnstoffelement (8) angeordnet und hinsichtlich seiner Größe so beschaffen ist, dass er als Abschirm- bzw. Strömungsleitelement fungiert und ein direktes Anströmen des Dehnstoffelements (8) mit von diesem Strömungsanschluss (6) kommenden Fluid verhindert.

2. Thermostatventil (1), wobei der Haltearm (12) die Form eines Kreiszylindersegments hat.

3. Thermostatventil (1) nach Anspruch 1 oder 2, wobei der Haltearm (12) in Umfangsrichtung des Dehnstoffelements (8) mindestens einen Winkelbereich überdeckt, welcher in Bezug auf die Umfangsrichtung des Dehnstoffelements (8) der Breite des Zuströmanschlusses (6) entspricht.

4. Thermostatventil (1) nach einem der Ansprüche 2 oder 3, wobei der Haltearm (12) einen Winkelbereich von mindestens 30° überdeckt.

5. Thermostatventil (1) nach einem der Ansprüche 1 bis 4, wobei der auf den Haltearm (12) ausgerichtete Zuströmanschluss (6) ein von einem Heizungswärmetauscher kommender Rücklauf ist.

6. Thermostatventil (1) nach einem der Ansprüche 1 bis 5, wobei der Flansch die Form einer ringförmigen Scheibe hat.

7. Thermostatventil (1) nach einem der Ansprüche 1 bis 6, wobei der Flansch (14) mittels den Haltearmen (12, 13) mit einem Tragelement (10) verbunden ist, das die Form einer ringförmigen Scheibe mit einer zentralen Öffnung hat.

8. Thermostatventil (1) nach Anspruch 7, wobei sich das Dehnstoffelement (8) durch den Flansch (14) und durch das Tragelement (10) hindurch erstreckt.

9. Thermostatventil (1) nach Anspruch 7 oder 8, wobei am Dehnstoffelement (8) ein scheibenförmiges Verschlusselement (11) befestigt ist, das im nicht erwärmten Zustand des Dehnstoffelements (8) durch die auf das Dehnstoffelement (8) wirkende Federkraft gegen das Tragelement (10) gedrückt ist und die zentrale Öffnung des Tragelements (10) verschließt.

10. Thermostatventil (1) nach einem der Ansprüche 1 bis 9, wobei das Dehnstoffelement (8) eine Wachspatrone ist.

11. Thermostatventil (1) nach einem der Ansprüche 1 bis 10, wobei das Dehnstoffelement (8) an seinem Ende einen Druckstift (18) aufweist, der bei einer Erwärmung des Dehnstoffelements (8) aus dem Gehäuse des Dehnstoffelements herausgedrückt wird und an einem mit dem Tragelement (10) verbundenen Haltebügel (19) abgestützt ist und an seinem anderen Ende einen Ventilkörper (15) aufweist, der mit einem durch einen der Zuströmanschlüsse (4) des Gehäuses (2, 3) gebildeten Ventilsitz zusammenwirkt und diesen bei einer Erwärmung des Dehnstoffelements (8) verschließt.

## Claims

1. A thermostat valve (1) comprising
a casing (2, 3), containing inflow connections (4, 4-6) and at least one outflow connection (7) to a cooling circuit of a motor vehicle, and
a thermostat insert (9) disposed in the casing (2, 3) and containing a cartridge-like expansion-material element (8) which is movable against the force of a spring (17) abutting a flange (14), wherein the flange (14) is held by retaining arms (12, 13), **characterised in that** one of the retaining arms (12, 13) is disposed directly in the region between one of the inflow connections (6) and the expansion-material element (8) and is dimensioned so that it acts as a screening or flow-guiding element and protects the element (8) from direct exposure to the fluid from the said flow connection (6).

2. A thermostat valve (1), wherein the retaining arm (12) is in the shape of a circular cylindrical segment.

3. A thermostat valve (1) according to claim 1 or 2, wherein the retaining arm (12) in the peripheral direction of the expansion-material element (8) covers at least one angular region which is equal to the width of the inflow connection (6) in the peripheral direction of the expansion-material element (8).

4. A thermostat valve (1) according to claim 2 or 3, wherein the retaining arm (12) covers an angular range of at least 30°.

5. A thermostat valve (1) according to any of claims 1 to 4, wherein the inflow connection (6) aligned with the retaining arm (12) is a return pipe from a heating heat exchanger.

6. A thermostat valve (1) according to any of claims 1 to 5, wherein the flange is disc-shaped.

7. A thermostat valve according to any of claims 1 to 6, wherein the flange (14) is connected to the retaining arms (12, 13) by a bearing element (10) in the shape of a disc with a central opening.

8. A thermostat valve (1) according to claim 7, wherein the expansion-material element (8) extends through the flange (14) and through the bearing element (10).

9. A thermostat valve (1) according to claim 7 or 8, wherein the expansion-material element (8) is fastened to a closure element (11) in the form of a disc which, when the expansion-material element (8) is not heated, is pressed against the bearing element (10) by the spring force acting on the expansion-material element (8) and closes the central opening of the bearing element (10).

10. A thermostat valve (1) according to any of claims 1 to 9, wherein the expansion-material element (8) is a wax cartridge.

11. A thermostat valve (1) according to any of claims 1 to 10, wherein the expansion-material element (8) at one end has a pressure pin (18) which, when the expansion element (8) is heated, is pressed out of the casing of the expansion-material element and abuts a retaining stirrup (19) connected to the bearing element (10), and at its other end has a valve body (15) which co-operates with a valve seat formed by one of the flow connections (4) of the casing (2, 5) and closes it when the expansion-material element (8) is heated.

## Revendications

1. Soupape thermostatique (1) qui comprend :
- un boîtier (2, 3) présentant des raccords d'entrée (4, 4-6) et au moins un raccord de sortie (7), pour liaison à un circuit de refroidissement d'un véhicule automobile.
- dans le boîtier (2, 3), un insert thermostatique (9) qui présente un élément en matière dilatable (8) du genre cartouche, pouvant coulisser contre la force d'un ressort (17) s'appuyant sur une bride (14) qui est tenue par des bras de maintien (12, 13)
**caractérisée en ce qu'**
un des bras de maintien (12, 13) est monté directement dans la zone située entre un des raccords d'entrée (6) et l'élément en matière dilatable (8) et il présente une dimension telle qu'il fonctionne comme élément faisant écran, c'est-à-dire conduisant l'écoulement, en empêchant un balayage direct de l'élément en matière dilatable (8) par le fluide arrivant par ce raccord d'entrée (6).

2. Soupape thermostatique (1)
**caractérisée en ce que**
le bras de maintien (12) a la forme d'un segment de cylindre circulaire.

3. Soupape thermostatique (1) selon la revendication 1 ou 2,
**caractérisée en ce que**
le bras de maintien (12), couvre, selon la direction périphérique de l'élément en matière dilatable (8) une zone angulaire qui correspond à la largeur que présente le raccord d'amenée (6), selon cette direction périphérique.

4. Soupape thermostatique (1) selon la revendication 2 ou 3,
**caractérisée en ce que**
le bras de maintien couvre une zone angulaire d'au moins 30°.

5. Soupape thermostatique (1) selon une des revendications 1 à 4,
**caractérisée en ce que**
le raccord d'entrée (6) dirigé sur le bras de maintien (12) est un raccord assurant le retour de l'échangeur thermique de chauffage.

6. Soupape thermostatique (1) selon une des revendications 1 à 5,
**caractérisée en ce que**
la bride a la forme d'un disque annulaire.

7. Soupape thermostatique (1) selon une des revendications 1 à 6,
**caractérisée en ce que**
la bride (14) est reliée par les bras de maintien (12, 13) à un élément porteur (10) qui a la forme d'un disque annulaire présentant une ouverture centrale.

8. Soupape thermostatique (1) selon la revendication 7,
**caractérisée en ce que**
l'élément en matière dilatable (8) s'étend à travers la bride (14) et à travers l'élément porteur (10).

9. Soupape thermostatique (1) selon la revendication 7 ou 8,
**caractérisée en ce que**
sur l'élément en matière dilatable (8), est fixé un élément obturateur (11) en forme de disque qui, quand l'élément (8) n'est pas à l'état chaud, est poussé par la force élastique agissant sur cet élément (8), contre l'élément porteur (10) et obture l'ouverture centrale de celui-ci.

10. Soupape thermostatique (1) selon une des revendications 1 à 9,
**caractérisée en ce que**
l'élément en matière dilatable (8) est une cartouche de cire.

11. Soupape thermostatique (1) selon une des revendications 1 à 10,
**caractérisée en ce que**
l'élément en matière dilatable ((8) présente à une extrémité une tige de poussée (18) qui, quand l'élément (8) s'échauffe, est chassée par poussée du boîtier de cet élément et s'appuie sur un étrier de maintien (19) relié à l'élément porteur (10), tandis qu'à l'autre extrémité il présente un corps de soupape (15) qui coopère avec un siège de soupape constitué par un des raccords d'entrée (4) du boîtier (2, 3) et obture ce siège quand l'élément en matière dilatable (8) s'échauffe.
